# EUROPEAN PATENT SPECIFICATION

(11) **EP 1 517 960 B1**
(45) Date of publication and mention of the grant of the patent: **10.12.2008**
(21) Application number: 03761132.4
(22) Date of filing: 19.06.2003
(51) Int. Cl.: C08L 81/06, H01B 3/30, H01B 13/14, H01B 3/42

(54) **MAGNET WIRE INSULATION COMPRISING A HIGH-TEMPERATURE SULFONE POLYMER BLEND**
MAGNETDRAHTISOLIERUNG, ENTHALTEND EINE HOCHTEMPERATURSULFONPOLYMERMISCHUNG
ISOLATION POUR FIL DE BOBINAGE COMPRENANT UN MELANGE DE POLYMERES DE SULFONE A TEMPERATURE ELEVEE

(30) Priority: 19.06.2002 US 389484 P
(43) Date of publication of application: 30.03.2005
(73) Proprietor: Solvay Advanced Polymers, L.L.C., Alpharetta, GA 30005-3914 (US)
(72) Inventor: WEINBERG, Shari, Atlanda, GA 30324 (US); CUPTA, Glenn, W., Roswell, GA 30075 (US); EL-HIBRI, M., Jamal, Atlanta, GA 30328 (US)
(74) Representative: Jacques, Philippe
(86) International application number: PCT/US2003/019318
(87) International publication number: WO 2004/000941

(56) References cited:
- US-A- 3 676 814
- US-A- 4 020 046
- US-A- 4 021 596
- US-A- 5 164 466
- US-A- 6 075 100

## Description

### FIELD OF THE INVENTION

This invention relates to a magnet wire comprising a melt processable, thermoplastic resin blend insulative coating developed especially for use in high temperature electrical insulation systems. More particularly, this invention relates to a high temperature electrical insulation system containing sulfone polymers for use with magnet wire and wherein the sulfone polymers comprise a blend of two poly(aryl ether sulfones). The blend exhibits improved electrical insulation and long term thermal and environmental aging stability relative to polysulfone.

### BACKGROUND OF THE INVENTION

Polymeric materials are used in magnet wire insulation coatings. Although thermoset materials are commonly used, magnet wire insulation coatings can include thermoplastics. These polymeric materials are applied as extruded coatings, wrapped films, powder coatings, and solvent-based enamels. Paper is also commonly used as wire wrap insulation.

Examples of thermoplastic polymers used in magnet wire insulation systems include poly(aryl ether sulfones), such as polyphenylsulfone. A magnet wire comprising a polyphenylsulfone resin insulation is commercially available under the tradename Reymag^{®} produced by Hanover Manufacturing Corporation. Polyphenylsulfone is a tough linear polymer that possesses a number of attractive features such as excellent high temperature resistance, good electrical properties, high ductility, good toughness, and very good hydrolytic stability. Polyphenylsulfone is available from Solvay Advanced Polymers, LLC, under the trademark of Radel^{®} R. It corresponds to the following repeat unit formula: 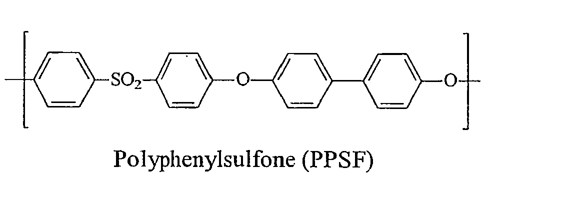 and has a Tg of about 220° C. It is produced by the polycondensation of biphenol with 4,4'-dichlorodiphenyl sulfone as described in Canadian Patent No. 847,963. Polyphenylsulfone is an expensive resin due to the high cost of biphenol.

High temperature insulation systems for magnet wire are required in many applications including transformers, motors, generators, solenoids, and relays. Requirements for such products include high efficiency or low dissipation at use temperatures; high continuous use temperatures; resistance to insulating fluids such as a mineral oil, a silicone oil, a vegetable oil, a synthetic oil, and mixtures thereof; and ability to withstand overload conditions. Not only is the magnet wire coating required to provide dielectric insulation, but it also must provide protection against abrasion, mechanical stress, and corrosion. Thus, magnet wire insulation systems have many more stringent requirements over mere dielectric insulation. There is, therefore, a continual need in the art to economically improve the performance of insulation systems for magnet wire.

### SUMMARY OF THE INVENTION

There exists a need in the magnet wire art for high performance insulation coatings that exhibit robust electrical insulation, long term thermal aging stability, and environmental resistance. There exists a need in the magnet wire art to economically produce high performance magnet wire insulation coatings, by reducing the amount of expensive resins used in the insulation coating. Further, there exists a need in the magnet wire art to produce high performance insulation coatings containing minimal amounts of consumable performance and stability additives. In addition, there exists a need in the magnet wire art to be able to economically and reliably insulate the wire by extrusion coating, solvent coating, film wrapping or powder coating.

In addition, there exists a need in the electrical device art for an electrical device comprising insulated magnet wire that can withstand long term exposure to high temperature. There further exists a need in the electrical device art for an electrical device comprising insulated magnet wire that has superior chemical resistance during long term exposure to oils.

These and other needs are met by certain embodiments of the present invention, that provide an insulated magnet wire comprising a metallic magnet wire and a polymer composition insulation coating, wherein the insulation coating comprises a blend of polyphenylsulfone (PPSF) and polysulfone (PSF), wherein the PPSF comprises the following structural repeat unit: 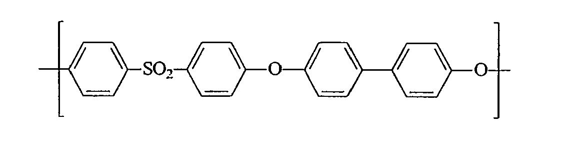 and the PSF comprises the following structural repeat unit:

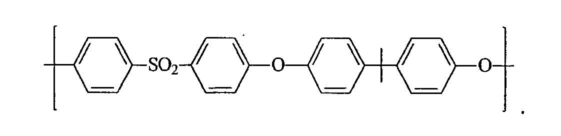

The earlier-stated needs are further met by an electrical device comprising an insulated magnet wire comprising a metallic wire and a polymer composition insulating coating, wherein the insulation coating comprises a blend of polyphenylsulfone (PPSF) and polysulfone (PSF), wherein the PPSF comprises the following structural repeat unit: 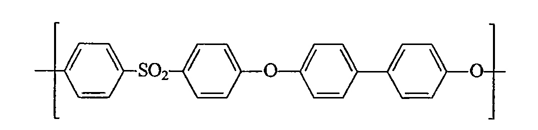 and the PSF comprises the following structural repeat unit:

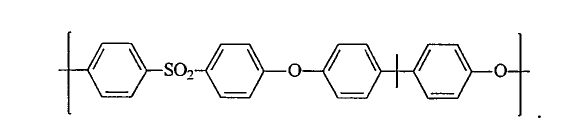

The eralier-stated needs are further met by certain embodiments of the present invention that provide an insulated magnet wire comprising a metallic magnet wire and a polymer composition insulation coating comprising from about 20 wt. % to about 80 wt. % PPSF and about 20 wt. % to about 80 wt. % PSF based on the total polymer weight.

Additional advantages and aspects of the present invention will become readily apparent to those skilled in the art from the following detailed description, wherein embodiments of the present invention are shown and described, simply by way of illustration of the best mode contemplated for practicing the present invention. As will be described, the present invention is capable of other and different embodiments, and its several details are susceptible to modification in various obvious respects, all without departing from the spirit of the present invention. Accordingly, the description is to be regarded as illustrative in nature, and not as limitative.

### BRIEF DESCRIPTION OF THE DRAWINGS

FIG. 1 illustrates an insulated magnet wire according to an embodiment of the present invention.
FIG. 2 illustrates an electrical device according to an embodiment of the present invention.

### DETAILED DESCRIPTION OF THE INVENTION

The present invention provides magnet wire with a robust electrical insulation coating. The present invention provides a high performance poly(aryl ether sulfone) blend which exhibits improved electrical insulation and long term thermal aging stability. The present invention allows for the economical production of a magnet wire comprising a high performance poly(aryl ether sulfone) blend coating with optional amounts of performance and stability additives. The present invention allows for the production of an insulated magnet wire with a reduced amount of an expensive resin, such as PPSF, which retains the high performance properties of PPSF. Coupled with all the above benefits, the present invention allows for the economical fabrication of metallic magnet wire with a thermoplastic blend containing poly(aryl ether sulfones). These benefits are provided by an insulated magnet wire comprising a metallic magnet wire and a polymer composition insulation coating, said polymer composition insulation coating comprising a blend of polyphenylsulfone (PPSF) and polysulfone (PSF). The PPSF comprises the following structural repeat unit: 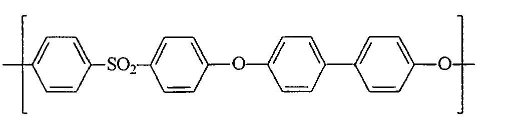 and the PSF comprises the following structural repeat unit:

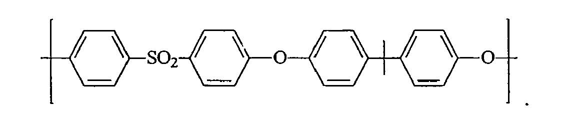

PPSF is available from commercial sources, including Solvay Advanced Polymers, LLC, under the trademark of Radel^{®} R. Suitable PPSF for certain embodiments of the present invention has a Tg of about 220 °C. PPSF is produced by the polycondensation of biphenol with 4,4'-dichlorodiphenyl sulfone as described in Canadian Patent No. 847,963, the entire disclosure of which is incorporated herein. In certain embodiments, the PPSF can be a copolymer wherein up to less than 50 mole % of the biphenol residue structural units are substituted with one or more aromatic dihydroxy compound residues other than those from biphenol. The aromatic dihydroxy compound residues other than those from biphenol are selected from the group consisting of 4,4'-isopropylidenediphenol (bisphenol A), 4,4'-dihydroxydiphenylether (bisphenol O), 4,4'-dihydroxydiphenylsulfone (bisphenol S), 4,4'-dihydroxybenzophenone, 1,4-bis(4-hydroxyphenyl) benzene, and hydroquinone.

PSF is available from commercial sources, including from Solvay Advanced Polymers, LLC, under the trademark of UDEL^{®}. Suitable PSF for certain embodiments of the present invention and has a Tg of about 185 °C. PSF is made via the nucleophilic polycondensation of bisphenol-A di-sodium salt with 4,4'-dichlorodiphenyl sulfone, as described in U.S. Pat. No. 4,108,837, the entire disclosure of which is incorporated herein. In certain embodiments, the PSF can be a copolymer wherein up to less than 50 mole % of the bisphenol A residue structural units are substituted with one or more aromatic dihydroxy compound residues other than those from bisphenol A. The aromatic dihydroxy compound residues other than those from bisphenol A are selected from the group consisting of 4,4'-dihydroxydiphenylether (bisphenol O), 4,4'-dihydroxydiphenylsulfone (bisphenol S), 4,4'-dihydroxybenzophenone, 1,4-bis(4-hydroxyphenyl) benzene, 4,4'-dihydroxydiphenyl (biphenol) and hydroquinone.

Properties of the PPSF/PSF blend provide benefits in the end-use applications of magnet wire. For example, PPSF/PSF blend coated magnet wire can be wound faster with fewer insulation tears than paper wrapped wire. The required insulation thickness is generally less than that required for paper wrapped wire which can yield smaller windings. Moreover, because the PPSF/PSF blend has a low equilibrium moisture content, magnet wire coils can be dried quickly and do not contribute to hydrolysis of insulating oils. In addition, the PPSF/PSF blend can perform under higher temperatures and more rigorous conditions in oil environments thereby reducing susceptibility to damage under overload conditions. The end result is increased reliability and longer service time. Furthermore, PPSF/PSF blend coated magnet wire uses a reduced amount of expensive PPSF resin, while retaining the high performance properties of PPSF required for magnet wire applications.

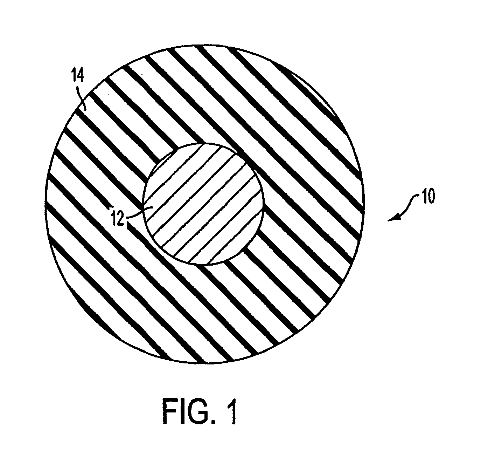

In FIG. 1, an insulated magnet wire 10 according to an embodiment of the present invention is depicted. Insulated magnet wire 10 comprises magnet wire 12 which can be comprised of a copper, aluminum and the like. Magnet wire 12 is coated with insulation coating 14 that is applied to magnet wire 12 to provide a continuous coating.

Other embodiments of the present invention include an insulated magnet wire comprising a metallic magnet wire and a polymer composition insulation coating that comprises from about 20 wt. % to about 80 wt. % PPSF and about 20 wt. % to about 80 wt. % PSF based on the total polymer weight. In certain embodiments of the present invention the insulated magnet wire comprises a metallic magnet wire and a polymer composition insulation coating that comprises greater than 50 wt. % PPSF based on the total polymer weight. In other certain embodiments of the present invention the insulated magnet wire comprises a metallic magnet wire and a polymer composition insulation coating that comprises from about 30 wt. % to about 70 wt. % PPSF and about 30 wt. % to about 70 wt. % PSF based on the total polymer weight. In other certain embodiments of the present invention the insulated magnet wire comprises a metallic magnet wire and a polymer composition insulation coating that comprises from about 40 wt. % to about 60 wt. % PPSF and about 40 wt. % to about 60 wt. % PSF based on the total polymer weight. Other certain embodiments of the present invention include a magnet wire composition comprising a metallic magnet wire and a polymer composition insulation coating comprising about 70 wt. % PPSF and about 30 wt. % PSF based on the total polymer weight. Other embodiments of the present invention include a magnet wire comprising a metallic magnet wire and a polymer composition insulation coating comprising about 55 wt. % PPSF and about 45 wt. % PSF based on the total polymer weight.

The PPSF/PSF blend of the present invention, may optionally include reinforcing filler, fiber, pigments, additives, and the like. Representative fibers which may serve as reinforcing media include glass fibers, asbestos, synthetic polymeric fibers, aluminum silicate fibers, wollastonite, rock wool fibers, etc. Representative filler and other materials include glass, calcium silicate, silica, clays, talc, mica; pigments such as carbon black, titanium dioxide, zinc oxide, iron oxide, cadmium red and iron blue; polymers such as polyethersulfone; and other additives such as, alumina trihydrate, sodium aluminum carbonate, and barium ferrite. Additional additives commonly employed in the magnet wire art such as thermal stabilizers, ultraviolet light stabilizers, plasticizers, and the like, may be included. Titanium dioxide and zinc oxide pigments are well suited for use in certain embodiments of the present invention.

Other certain embodiments of the present invention include a method for providing an insulated magnet wire with a polymer composition insulation coating, the method comprising the step of coating a polymer composition insulation on a metallic magnet wire. The polymer composition insulation coating comprises a blend of polyphenylsulfone (PPSF) and polysulfone (PSF), wherein the PPSF comprises the following structural repeat unit: 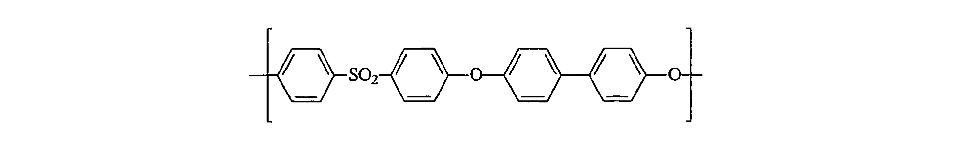 and the PSF comprises the following structural repeat unit:

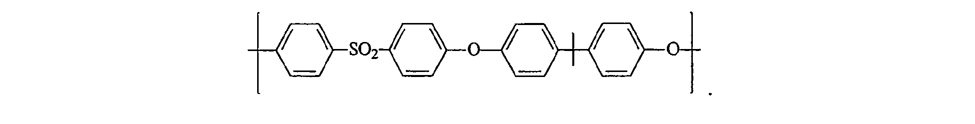

Other embodiments of the present invention include a method of providing an insulated magnet wire with a polymer composition insulation coating, wherein the insulation coating comprises from about 20 wt. % to about 80 wt. % PPSF and about 20 wt. % to about 80 wt. % PSF based on the total polymer weight. In certain embodiments of the present invention the insulated magnet wire comprises a metallic magnet wire and a polymer composition insulation coating that comprises greater than 50 wt. % PPSF based on the total polymer weight. In other certain embodiments of the present invention the insulated magnet wire comprises a metallic magnet wire and a polymer composition insulation coating that comprises from about 30 wt. % to about 70 wt. % PPSF and about 30 wt. % to about 70 wt. % PSF based on the total polymer weight. In other certain embodiments of the present invention the insulated magnet wire comprises a metallic magnet wire and a polymer composition insulation coating that comprises from about 40 wt. % to about 60 wt. % PPSF and about 40 wt. % to about 60 wt. % PSF based on the total polymer weight. Other certain embodiments of the present invention include a method of providing an insulated magnet wire with a polymer composition insulation coating, wherein the insulation coating comprises about 70 wt. % PPSF and about 30 wt. % PSF based on the total polymer weight. Other embodiments of the present invention include a method of providing an insulated magnet wire with a polymer composition insulation coating, wherein the insulation coating comprises about 55 wt. % PPSF and about 45 wt. % PSF based on the total polymer weight.

Additional advantages realized through the use of present invention's insulated magnet wire is the ability to fabricate insulated magnet wire using multiple techniques. Insulation can be applied by wrapping plastic extruded or solvent cast film. It can also be applied by solvent coating like other common enamels or by known powder coating techniques. In the case of solvent coating, an oven step is used only for the purpose of driving off solvent rather than curing and driving off solvent.

The most efficient and cost effective method is to melt extrude the coating directly on the magnet wire. In melt extrusion fabrication, solvent recovery systems are not required and curing steps are optional. Extruders required to provide the necessary throughput for wire coating applications are quite small and economical to install. The excellent thermal stability of the PPSF/PSF insulation coating also allows melt extrusion processing of magnet wire at fabrication temperatures up to 400° C. Magnet wire can be prepared either by conforming, drawing, or rolling. The PPSF/PSF insulation coating of the present invention may be used with round and shaped aluminum and copper wire of varying size.

Other embodiments of the present invention include forming the magnet wire and then coating the wire by a metal conforming line and melt extrusion coating line in tandem. A variety of round and rectangular wire sizes are produced via this technique. The metallic magnet wire is particularly suitable for use in oil-filled transformers.

Other certain embodiments of the present invention include a method for providing an insulated magnet wire comprising the PPSF/PSF polymer composition insulation coating. The method includes the step of melt extruding. The melt extrusion process comprises providing a supply of metal feed stock and continuously feeding the feed stock into a rotary extrusion press and continuously forming the magnet wire. The magnet wire can be formed in tandem with the extrusion operation or it can be formed in a separate step and heated prior to the polymer composition coating. The metal wire can be formed as described above with a rotary extrusion press, or it may be drawn. It may also be formed by rolling or flattening round wire into a rectangular shape. The extruded magnet wire is moved through extrusion die at a set speed. In certain embodiments of the present invention, sulfone polymer-based insulation coating of the present invention is extruded using a tubing or semi-tubing technique which involves a crosshead assembly and a tip and die configuration that contains flow channels designed to maximize the uniformity of the coating on shaped magnet wire. The tube is extruded around and spaced from the extruded magnet wire, and the tube is extruded such that the thickness of the polymer material is reduced or drawn down before it contacts the extruded magnet wire. A vacuum is provided between the extruded magnet wire and the polymeric material being extruded thereby causing atmospheric pressure to progressively press the extruded polymeric material into contact with the extruded magnet wire. Application of the polymer through means of pressure extrusion technique may also be suitable. In pressure extrusion, metal wire is brought into contact with molten polymer within the crosshead die to form the coating and no tube is extruded. The magnet wire is extruded in a heated condition, but the temperature is controlled to a suitable range for application of the polymeric material to the wire. The temperature is selected to control the cooling rate of the polymer on the wire which in turn can minimize stress in the coating and maximize adhesion of the coating to the magnet wire. The particular metal of the magnet wire is not critical and may include any commonly used electrically conductive material including, for example, aluminum, aluminum-based alloys, copper, and copper-based alloys.

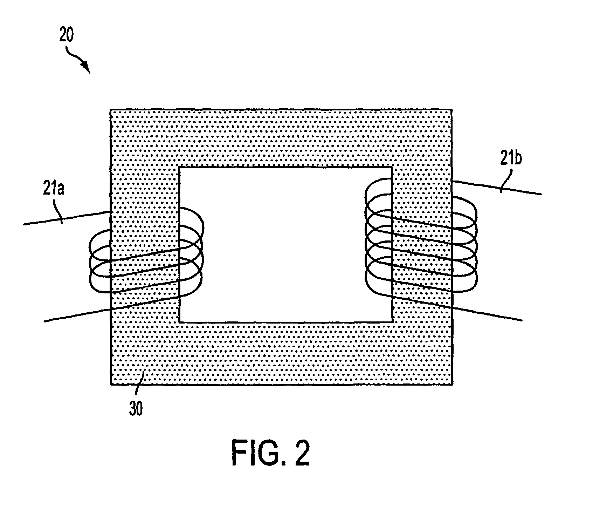

Other embodiments of the present invention include using the insulated magnet wire of the present invention in high temperature electrical insulation systems. Suitable high temperature electrical insulation systems include electrical devices, including voltage transformers, motors, generators, alternators, solenoids, relays, and the like. In FIG. 2, transformer 20, according to an embodiment of the present invention is depicted. Transformer 20 comprises two coils 21a, 21b of insulated magnet wire, which are wrapped around core 30. Transformer 20 can be a step-up transformer, wherein coil 21a will be a primary coil (i.e. has an electric current passed through it) and coil 21b will be a secondary coil (has an electric current induced within it). Alternatively, transformer 20 can be a step-down transformer, wherein coil 21a will be a secondary coil (has an electric current induced within it) and coil 21b will be a primary coil (i.e. has an electric current passed through it). In either embodiment, core 30 is a magnet comprised of iron, or the like.

Properties of the PPSF/PSF blend, Example 1, are depicted in Table 1, and are compared with the PPSF resin, Control 1. The PPSF/PSF blend absorbs slightly less moisture than PPSF and exhibits greater melt stability than PPSF. Melt stability is characterized by measuring the ratio of melt viscosity measured at 50 reciprocal seconds after exposure to 410°C for 40 minutes to the melt viscosity measured after 10 minutes. The PPSF/PSF blend exhibits a viscosity ratio of 1.3 versus 1.5 which is typical of PPSF resins. Example 1 is a 70 wt. % / 30 wt. % based on the total polymer weight RADEL^{®} R PPSF / UDEL^{®} PSF blend. As demonstrated, the PPSF/PSF blend has comparable superior flame resistance, mechanical strength, and minimum moisture absorption, as the PPSF resin, Control 1. These properties demonstrate the compatibility of the PPSF/PSF blend with magnet wire applications. Further, the PPSF/PSF blend exhibits superior properties over the PSF resin, Comparative Example 1. The supertough behavior of the PPSF/PSF blend is evidenced by the high notched Izod impact strength. Further the PPSF/PSF blend exhibits superior thermal properties over the PSF resin, as evidenced by the heat deflection temperature results in Table 1. It is noted that the glass transition temperature for the PPSF/PSF blend is 185/220 due to the immiscible blend of the two polymers (i.e. one glass transition temperature will occur for each polymer).

**TABLE 1 Selected Properties of Polyphenylsulfone and a Polyphenylsulfone Blend**

| **Physical** | Method | Units | Comparative Example 1 PSF | Control 1 PPSF | Example 1 70 wt. % PPSF/ 30 wt. % PSF Blend |
|---|---|---|---|---|---|
| Moisture Absorption | ASTM | - | | | |
| After 24 hrs | D-570 | % | 0.3 | 0.37 | 0.30 |
| At Equilibrium | D-570 | % | 0.6 | 1.1 | 0.95 |
| Specific Gravity | D-792 | | 1.24 | 1.29 | 1.28 |
| **Mechanical** | | | | | |
| Tensile Strength | D-638 | MPa | 70 | 70 | 70 |
| Elongation at Break | D-638 | % | 50-100 | 90 | 60 |
| Flexural Strength | D-790 | MPa | 105 | 105 | 105 |
| Notched Izod Impact | D-256 | J/m | 69 | 694 | 265 |
| Un-notched Izod | D-256 | J/m | 0 Breaks | 0 Breaks | 0 Breaks |
| **Thermal** | | | | | |
| Glass Transition Temp. | | °C | 185 | 220 | 185/220 |
| Heat Deflection Temp. | D-648 | °C | 174 | 207 | 200 |
| **Electrical** | | | | | |

| Dielectric Constant after 48 hours of conditioning at 23°C and 50% RH | | | | | |
|---|---|---|---|---|---|
| @ 1 MHz | D-150 | - | 3.1 | 3.45 | 3.40 |
| **Flammability** | | | | | |
| Limiting Oxygen Index | D-2863 | % | 26 | 38 | 36 |

Relevant performance characteristics of aluminum wire coated with the PPSF/PSF insulation blend were evaluated and the results are given in Table 2. It can be seen in Table 2 that wire coated with the PPSF/PSF blend exhibits good flexibility, adhesion, and elongation, comparable to aluminum wire coated with the more expensive PPSF resin. The PPSF/PSF magnet wire insulation is also resistant to heat shock, and can maintain dielectric strength at temperatures up to 200 °C. At temperatures of 200 °C, the dissipation remains at about 0.007 which is far lower than many polyvinylformal based resins and paper. Thus, the magnet wires coated with the present invention's insulative coating are suitable for use with high temperature systems.

**TABLE 2 NEMA MW 1000 Quality Tests of Magnet Wire Using Test Methods NEMA MW 1000/ASTM D-1676. All measurements made by Eltek International Laboratories on rectangular aluminum magnet wire.**

| **Test** | **Control 1** | **Example 1** |
|---|---|---|
| Aluminum Bare Wire Width | 0.3253 in | 0.3251 in |
| Thickness | 0.1137 in | 0.1138 in |
| Overall Dimensions Width | 0.3367 in | 0.3349 in |
| Thickness | 0.1208 in | 0.1201 in |
| Increase in Dimension Width | 0.1140 in | 0.0098 in |
| Thickness | 0.0071 in | 0.0063 in |
| Average Film Build Width | 0.0057 in | 0.0049 in |
| Thickness | 0.0036 in | 0.0032 in |
| Elongation to Break | 20% (Rectangular Wire) 35% (Round Wire) | 33% (Rectangular Wire) |
| Flatwise Bend | No cracks visible in the film coating | No cracks visible in the filr coating |
| Egdewise Bend | No cracks visible in the film No coating | cracks visible in the filr coating |
| Windability | No cracks visible in the film No coating | cracks visible in the filr coating |
| Heat Shock | No cracks visible in the film coating after conditioning at 260°C | No cracks visible in the filr coating after conditioning a 175°C |
| Thermoplastic Flow | 265°C | 245°C |

| Breakdown Voltage after 48 hours of conditioning at 23°C and 50% RH | | |
|---|---|---|
| 23°C | 10.88kV | 9.30kV |
| 150°C | 8.96kV | 9.32kV |
| 180°C | 8.79kV | 8.48kV |
| 200°C | 8.90kV | 7.07kV |

| Dissipation after 48 hours of conditioning at 23°C and 50% RH | | |
|---|---|---|
| 23°C | 0.0022 | 0.0016 |
| 150°C | 0.0007 | 0.0008 |
| 180°C | 0.0021 | 0.0042 |
| 200°C | 0.0042 | 0.0069 |

The insulation coating of the present invention also retains properties after over 5 months of aging in hot transformer oil, and the results are given in Table 3. The wires were coated with resin by drawing them through a melt-flow apparatus. By passing the wire through the die, and keeping the apparatus primed with resin pellets, a coating was passed through the die and on to the bare wire. For each coated wire, a length was wrapped around a rod 1/4" in diameter, and 1/16" in diameter to resemble a spring. Two straight lengths of wire at approximately 2-3" were also cut. The wires were then placed into a glass-lined Parr reactor with sufficient transformer oil to submerge the wires. The reactor was placed in an oven and the temperature was set to 150 °C. The wires were subjected to the heated oil in the reactor at a temperature of about 150 °C ± 1 °C. The reactor was periodically removed from the oven, cooled to room temperature, and the wire samples were removed from the reactor for evaluation. Following each evaluation the wires were re-submerged in the oil contained in the glass-lined Parr reactor. Evaluations were taken at different intervals, and the results are summarized in Table 3.

The PPSF resin (RADEL^{®} R) does not exhibit any failure in this hot oil environment. Moreover, it is evident that the resin blend (PPSF/PSF) of the present invention did not exhibit stress-cracking behavior even after a period of 5 months. The results are unexpected in view of the proximity of the hot oil environment temperature to the glass transition temperatures (Tg) of the PSF contained in the blend and the increased environmental sensitivity that might be expected for the PSF at this temperature. The PSF resin has a lower glass transition temperature (Tg = 185 °C), compared to the PPSF resin (Tg = 220 °C). Further, the test sample containing the PSF resin (UDEL^{®}) exhibited stress-cracking behavior after exposure to the silicone oil at 150 °C after only one week. However, the resin blend (70 wt. % PPSF / 30 wt. % PSF) of the present invention did not exhibit stress-cracking behavior during the hot oil aging experiment. Thus, the PPSF/PSF resin blend used in the present invention offers high performance properties that are characteristic of the PPSF resin.

**TABLE 3 - Hot Transformer Oil Experiment**

| RESIN | DAY 1 | DAY 20 | DAY 48 | DAY 56 | DAY 97 | DAY 145 | DAY 156 |
|---|---|---|---|---|---|---|---|
| PPSF | Insulated wire submerged in oil | Clean and free of cracks and crazing - no significant change | Same as Day 20 - no significant change | Same as Day 48 - no significant change | Same as Day 56 - no significant change | Same as Day 97 - no significant change | Same as Day 145 - no significant change |
| 70 wt. % PPSF / 30 wt. % PSF Blend | Insulated wire submerged in oil | Clean and free of cracks and crazing - no significant change | Same as Day 20 - no significant change | Same as Day 48 - no significant change | Same as Day 56 - no significant change | Same as Day 97 - no significant change | Same as Day 145 - no significant change |
| PSF | Insulated wire submerged in oil | Straight wires crazed and springs have cracks | Same as Day 20 - no significant change | Same as Day 48 - no significant change | Same as Day 56 - no significant change | Same as Day 97 - no significant change | Same as Day 145 - no significant change |

The present invention enjoys industrial applicability in the production of insulated magnet wire for use with high temperature electrical insulation systems. The present invention is particularly applicable in the production of insulated magnet wire having a polymer insulation coating for use with high temperature electrical insulation systems. Further, the present invention is particularly applicable in the production of magnetic wire having a poly(aryl ether sulfone) blend insulative coating, exhibiting robust electrical insulation and long term thermal aging stability along with improved economics over the current art.

Only the preferred embodiment of the present invention and a few examples of its versatility are shown and described in the present disclosure. They should not be construe to limit the scope of the claims. It is understood by one of ordinary skill in this art that the present invention is capable of use in various other combinations and environments and is susceptible of changes or modifications within the scope of the inventive concept as expressed herein.

## Claims

1. Insulated magnet wire comprising a metallic magnet wire and a polymer composition insulation coating, said polymer composition insulation coating comprising a blend of a polyphenylsulfone (PPSF) and a polysulfone (PSF), wherein the PPSF comprises the following structural repeat unit: 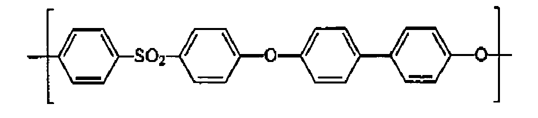 and the PSF comprises the following structural repeat unit:

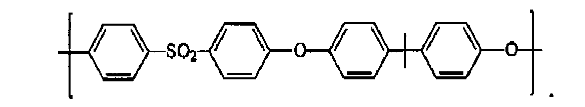

2. Insulated magnet wire according to claim 1, **characterized in that** the insulation coating comprises greater than 50 wt. % PPSF based on the total polymer weight.

3. Insulated magnet wire according to claim 1 or 2, **characterized in that** the PPSF is a homopolymer or a copolymer wherein up to less than 50 mole % of the biphenol residue structural units of the homopolymer are substituted with one or more aromatic dihydroxy compound residues other than those from biphenol, and wherein the aromatic dihydroxy compound residues other than those from biphenol are selected from the group consisting of 4,4'-isopropylidenediphenol, 4,4'-dihydroxydiphenylether, 4,4'-dihydroxydiphenylsulfone, 4,4'-dihydroxybenzophenone, 1,4-bis(4-hydroxyphenyl) benzene, and hydroquinone.

4. Insulated magnet wire according to claim 1 or 2, **characterized in that** the PSF is a homopolymer or a copolymer wherein up to less than 50 mole % of the bisphenol A residue structural units of the homopolymer are substituted with one or more aromatic dihydroxy compound residues other than those from bisphenol A, and wherein the aromatic dihydroxy compound residues other than those from bisphenol A are selected from the group consisting of 4,4'-dihydroxydiphenylether, 4,4'-dihydroxydiphenylsulfone, 4,4'-dihydroxybenzophenone, 1,4-bis(4-hydroxyphenyl) benzene, 4,4'-dihydroxydiphenyl and hydroquinone.

5. Method for providing an insulated magnet wire with a polymer composition insulation coating, said method comprising the step of coating a polymer composition insulation on a bare metallic magnet wire, said polymer composition insulation coating comprising a blend of a polyphenylsulfone (PPSF) and a polysulfone (PSF), wherein the PPSF comprises the following structural repeat unit : 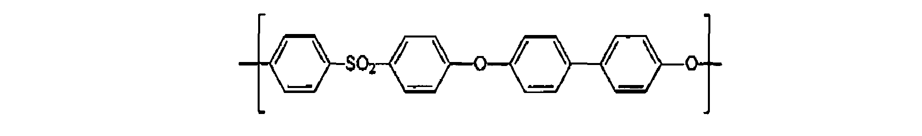 and the PSF comprises the following structural repeat unit:

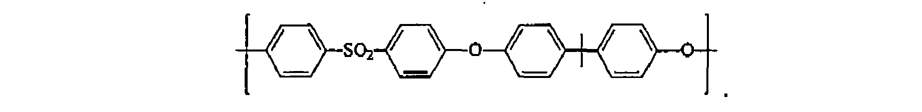

6. Method according to claim 5, **characterized in that** the insulation coating comprises greater than 50 wt. % PPSF based on the total polymer weight.

7. Method according to claim 5 or 6, **characterized in that** the coating step is selected from the group consisting of melt extruding, solvent coating, powder coating and film wrapping.

8. Method according to claim 7, **characterized in that** the coating step is melt extruding.

9. Method according to claim 8, **characterized in that** the metallic magnet wire is preheated prior to extruding the insulation coating on the metallic magnet wire.

10. Method according to claim 8, **characterized in that** the insulation coating is melt filtered prior to it being extruded on the metallic magnet wire.

11. Method according to claim 8, **characterized in that** said melt extruding step is free of solvent.

12. Method according to any of claims 5 to 8, further comprising a baking means to cure said coating.

13. Method according to claim 12, further comprising cooling the cured coating on said metallic magnet wire.

14. Method according to any of claims 5 to 13, **characterized in that** the PPSF is Radel^{®}R PPSF or a copolymer wherein up to less than 50 mole % of the biphenol residue structural units of the homopolymer are substituted with one or more aromatic dihydroxy compound residues other than those from biphenol, and wherein the aromatic dihydroxy compound residues other than those from biphenol are selected from the group consisting of 4,4'-isopropylidenediphenol, 4,4'-dihydroxydiphenylether, 4,4'-dihydroxydiphenylsulfone, 4,4'-dihydroxybenzophenone, 1,4-bis(4-hydroxyphenyl) benzene, and hydroquinone.

15. Method according to any of claims 5 to 13, **characterized in that** the PSF is Udel^{®} PSF or a copolymer wherein up to less than 50 mole % of the bisphenol A residue structural units of the homopolymer are substituted with one or more aromatic dihydroxy compound residues other than those from bisphenol A, and wherein the aromatic dihydroxy compound residues other than those from bisphenol A are selected from the group consisting of 4,4'-dihydroxydiphenylether, 4,4'-dihydroxydiphenylsulfone, 4,4'-dihydroxybenzophenone, 1,4-bis(4-hydroxyphenyl) benzene, 4,4'-dihydroxydiphenyl and hydroquinone.

16. Use of the insulated magnet wire according to any of claims 1 to 4 or obtained by the method according to any of claims 5 to 15, in a high temperature electrical insulation system.

17. Use according to claim 16, **characterized in that** the metallic magnet wire is used in contact with an insulating fluid selected from the group consisting of a mineral oil, a silicone oil, a vegetable oil, a synthetic oil, and mixtures thereof.

18. Electrical device comprising the insulated magnet wire according to any of claims 1 to 4.

## Patentansprüche

1. Isolierter Magnetdraht mit einem metallischen Magnetdraht und einer Isolierungsbeschichtung aus Polymerzusammensetzung, wobei die Isolierungsbeschichtung aus Polymerzusammensetzung eine Mischung aus einem Polyphenylsulfon (PPSF) und einem Polysulfon (PSF) umfaßt, worin das PPSF die folgende wiederkehrende Struktureinheit umfaßt : 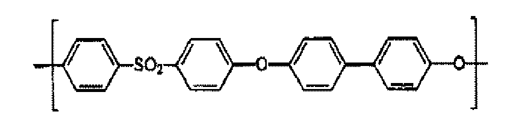 und das PSF die folgende wiederkehrende Struktureinheit umfaßt:

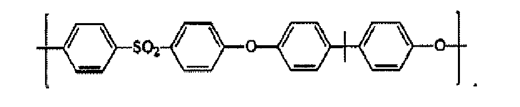

2. Isolierter Magnetdraht nach Anspruch 1, **dadurch gekennzeichnet, daß** die Isolierungsbeschichtung mehr als 50 Gew.- % PPSF, bezogen auf das Polymergesamtgewicht, umfaßt.

3. Isolierter Magnetdraht nach Anspruch 1 oder 2, **dadurch gekennzeichnet, daß** es sich bei dem PPSF um ein Homopolymer oder ein Copolymer, worin bis zu weniger als 50 Mol- % der Biphenolrest-Struktureinheiten des Homopolymers durch einen oder mehrere von Biphenolresten verschiedene Reste aromatischer Dihydroxyverbindungen ersetzt sind und die von Biphenolresten verschiedenen Reste aromatischer Dihydroxyverbindungen aus der Gruppe bestehend aus 4,4'-Isopropylidendiphenol, 4,4'-Dihydroxydiphenylether, 4,4'-Dihydroxydiphenylsulfon, 4,4'-Dihydroxybenzophenon, 1,4-Bis(4-hydroxyphenyl)benzol und Hydrochinon ausgewählt sind, handelt.

4. Isolierter Magnetdraht nach Anspruch 1 oder 2, **dadurch gekennzeichnet, daß** es sich bei dem PSF um ein Homopolymer oder ein Copolymer, worin bis zu weniger als 50 Mol- % der Bisphenol-A-Rest-Struktureinheiten des Homopolymers durch einen oder mehrere von Bisphenol-A-Resten verschiedene Reste aromatischer Dihydroxyverbindungen ersetzt sind und die von Bisphenol-A-Resten verschiedenen Reste aromatischer Dihydroxyverbindungen aus der Gruppe bestehend aus 4,4' -Dihydroxydiphenylether, 4,4' -Dihydroxydiphenylsulfon, 4,4'-Dihydroxybenzophenon, 1,4-Bis(4-hydroxyphenyl)benzol, 4,4'-Dihydroxydiphenyl und Hydrochinon ausgewählt sind, handelt.

5. Verfahren zur Bereitstellung eines isolierten Magnetdrahts mit einer Isolierungsbeschichtung aus Polymerzusammensetzung, bei dem man einen blanken metallischen Magnetdraht mit einer Isolierung aus Polymerzusammensetzung beschichtet, wobei die Isolierungsbeschichtung aus Polymerzusammensetzung eine Mischung aus einem Polyphenylsulfon (PPSF) uns einem Polysulfon (PSF) umfaßt, worin das PPSF die folgende wiederkehrende Struktureinheit umfaßt : 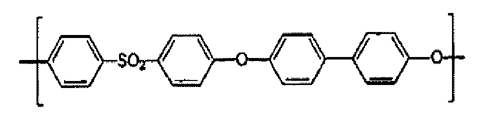 und das PSF die folgende wiederkehrende Struktureinheit umfaßt :

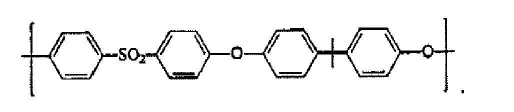

6. Verfahren nach Anspruch 5, **dadurch gekennzeichnet, daß** die Isolierungsbeschichtung mehr als 50 Gew.- % PPSF, bezogen auf das Polymergesamtgewicht, umfaßt.

7. Verfahren nach Anspruch 5 oder 6, **dadurch gekennzeichnet, daß** man den Beschichtungsschritt aus der Gruppe bestehend aus Schmelzeextrudieren, Lösungsmittelbeschichten, Pulverbeschichten und Folienumwickeln auswählt.

8. Verfahren nach Anspruch 7, **dadurch gekennzeichnet, daß** es sich bei dem Beschichtungsschritt um Schmelzeextrudieren handelt.

9. Verfahren nach Anspruch 8, **dadurch gekennzeichnet, daß** man den metallischen Magnetdraht vor dem Aufextrudieren der Isolierungsbeschichtung auf den metallischen Magnetdraht vorerhitzt.

10. Verfahren nach Anspruch 8, **dadurch gekennzeichnet, daß** man die Isolierungsbeschichtung vor dem Aufextrudieren auf den metallischen Magnetdraht schmelzefiltriert.

11. Verfahren nach Anspruch 8, **dadurch gekennzeichnet, daß** der Schmelzeextrusionsschritt lösungsmittelfrei ist.

12. Verfahren nach einem der Ansprüche 5 bis 8, das ferner ein Einbrennmittel zum Härten der Beschichtung umfaßt.

13. Verfahren nach Anspruch 12, bei dem man ferner die gehärtete Beschichtung auf dem metallischen Magnetdraht abkühlt.

14. Verfahren nach einem der Ansprüche 5 bis 13, **dadurch gekennzeichnet, daß** es sich bei dem PPSF um Radel^{®}R-PPSF oder ein Copolymer, worin bis zu weniger als 50 Mol- % der Biphenolrest-Struktureinheiten des Homopolymers durch einen oder mehrere von Biphenolresten verschiedene Reste aromatischer Dihydroxyverbindungen ersetzt sind und die von Biphenolresten verschiedenen Reste aromatischer Dihydroxyverbindungen aus der Gruppe bestehend aus 4,4'-Isopropylidendiphenol, 4,4'-Dihydroxydiphenylether, 4,4'-Dihydroxydiphenylsulfon, 4,4'-Dihydroxybenzophenon, 1,4-Bis(4-hydroxyphenyl)benzol und Hydrochinon ausgewählt sind, handelt.

15. Verfahren nach einem der Ansprüche 5 bis 13, **dadurch gekennzeichnet, daß** es sich bei dem PSF um Udel^{®}-PSF oder ein Copolymer, worin bis zu weniger als 50 Mol- % der Bisphenol-A-Rest-Struktureinheiten des Homopolymers durch einen oder mehrere von Bisphenol-A-Resten verschiedene Reste aromatischer Dihydroxyverbindungen ersetzt sind und die von Bisphenol-A-Resten verschiedenen Reste aromatischer Dihydroxyverbindungen aus der Gruppe bestehend aus 4,4'-Dihydroxydiphenylether, 4,4'-Dihydroxydiphenylsulfon, 4,4'-Dihydroxybenzophenon, 1,4-Bis(4-hydroxyphenyl)benzol, 4,4'-Dihydroxydiphenyl und Hydrochinon ausgewählt sind, handelt.

16. Verwendung des isolierten Magnetdrahts nach einem der Ansprüche 1 bis 4 oder des nach dem Verfahren nach einem der Ansprüche 5 bis 15 erhaltenen isolierten Magnetdrahts in einem bei hoher Temperatur arbeitenden Elektroisolierungssystem.

17. Verwendung nach Anspruch 16, **dadurch gekennzeichnet, daß** der metallische Magnetdraht in Kontakt mit einem Isolierungsfluid aus der Gruppe bestehend aus einem Mineralöl, einem Silikonöl, einem Pflanzenöl, einem synthetischen Öl und Mischungen davon verwendet wird.

18. Elektrische Vorrichtung mit dem isolierten Magnetdraht nach einem der Ansprüche 1 bis 4.

## Revendications

1. Fil de bobinage isolé comprenant un fil de bobinage métallique et un revêtement d'isolation à composition polymère, ledit revêtement d'isolation à composition polymère comprenant un mélange d'une polyphénylsulfone (PPSF) et d'une polysulfone (PSF), où la PPSF comprend le motif récurrent structural suivant : 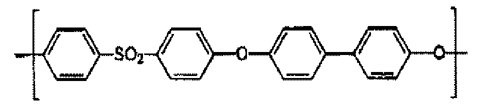 et la PSF comprend le motif récurrent structural suivant :

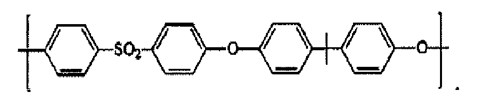

2. Fil de bobinage isolé selon la revendication 1, **caractérisé en ce que** le revêtement d'isolation comprend plus de 50 % en poids de PPSF, par rapport au poids total de polymère.

3. Fil de bobinage isolé selon la revendication 1 ou 2, **caractérisé en ce que** la PPSF est un homopolymère ou un copolymère, où jusqu'à moins de 50 % en moles des motifs structuraux de résidu biphénol de l'homopolymère sont substitués par un ou plusieurs résidus de composé dihydroxyaromatique autres que ceux du biphénol, et où les résidus de composé dihydroxyaromatique autres que ceux du biphénol sont choisis parmi le groupe constitué du 4,4'-isopropylidènediphénol, de l'éther 4,4'-dihydroxydiphénylique, de la 4,4'-dihydroxydiphénylsulfone, de la 4,4'-dihydroxybenzophénone, du 1,4-bis(4-hydroxyphényl)benzène et de l'hydroquinone.

4. Fil de bobinage isolé selon la revendication 1 ou 2, **caractérisé en ce que** la PSF est un homopolymère ou un copolymère, où jusqu'à moins de 50 % en moles des motifs structuraux de résidu bisphénol A de l'homopolymère sont substitués par un ou plusieurs résidus de composé dihydroxyaromatique autres que ceux du bisphénol A, et où les résidus de composé dihydroxyaromatique autres que ceux du bisphénol A sont choisis parmi le groupe constitué de l'éther 4,4'-dihydroxydiphénylique, de la 4,4'-dihydroxydiphénylsulfone, de la 4,4'-dihydroxybenzophénone, du 1,4-bis(4-hydroxyphényl)benzène, du 4,4'-dihydroxydiphényle et de l'hydroquinone.

5. Procédé pour doter un fil de bobinage isolé d'un revêtement d'isolation à composition polymère, ledit procédé comprenant l'étape de revêtement d'un fil de bobinage métallique nu avec une isolation à composition polymère, ledit revêtement d'isolation à composition polymère comprenant un mélange d'une polyphénylsulfone (PPSF) et d'une polysulfone (PSF), où la PPSF comprend le motif récurrent structural suivant : 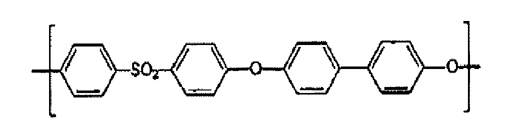 et la PSF comprend le motif récurrent structural suivant :

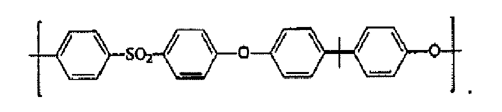

6. Procédé selon la revendication 5, **caractérisé en ce que** le revêtement d'isolation comprend plus de 50 % en poids de PPSF, par rapport au poids total de polymère.

7. Procédé selon la revendication 5 ou 6, **caractérisé en ce que** l'étape de revêtement est choisie parmi le groupe constitué de l'extrusion à l'état fondu, du revêtement à solvant, du revêtement à poudre et du pelliculage.

8. Procédé selon la revendication 7, **caractérisé en ce que** l'étape de revêtement est l'extrusion à l'état fondu.

9. Procédé selon la revendication 8, **caractérisé en ce que** le fil de bobinage métallique est pré-chauffé avant l'extrusion du revêtement d'isolation sur le fil de bobinage métallique.

10. Procédé selon la revendication 8, **caractérisé en ce que** le revêtement d'isolation est filtré à l'état fondu avant d'être extrudé sur le fil de bobinage métallique.

11. Procédé selon la revendication 8, **caractérisé en ce que** ladite étape d'extrusion à l'état fondu est exempte de solvant.

12. Procédé selon l'une quelconque des revendications 5 à 8, comprenant en outre un moyen de cuisson pour le durcissement dudit revêtement.

13. Procédé selon la revendication 12, comprenant en outre le refroidissement du revêtement durci sur ledit fil de bobinage métallique.

14. Procédé selon l'une quelconque des revendications 5 à 13, **caractérisé en ce que** la PPSF est la PPSF Radel^{®}R ou un copolymère, où jusqu'à moins de 50 % en moles des motifs structuraux de résidu biphénol de l'homopolymère sont substitués par un ou plusieurs résidus de composé dihydroxyaromatique autres que ceux du biphénol, et où les résidus de composé dihydroxyaromatique autres que ceux du biphénol sont choisis parmi le groupe constitué du 4,4'-isopropylidènediphénol, de l'éther 4,4'-dihydroxydiphénylique, de la 4,4'-dihydroxydiphénylsulfone, de la 4,4'-dihydroxybenzophénone, du 1,4-bis(4-hydroxyphényl)benzène et de l'hydroquinone.

15. Procédé selon l'une quelconque des revendications 5 à 13, **caractérisé en ce que** la PSF est la PSF Udel^{®} ou un copolymère, où jusqu'à moins de 50 % en moles des motifs structuraux de résidu bisphénol A de l'homopolymère sont substitués par un ou plusieurs résidus de composé dihydroxyaromatique autres que ceux du bisphénol A, et où les résidus de composé dihydroxyaromatique autres que ceux du bisphénol A sont choisis parmi le groupe constitué de l'éther 4,4'-dihydroxydiphénylique, de la 4,4'-dihydroxydiphénylsulfone, de la 4,4'-dihydroxybenzophénone, du 1,4-bis(4-hydroxyphényl)benzène, du 4,4'-dihydroxydiphényle et de l'hydroquinone.

16. Utilisation du fil de bobinage isolé selon l'une quelconque des revendications 1 à 4 ou obtenu par le procédé selon l'une quelconque des revendications 5 à 15, dans un système d'isolation électrique à température élevée.

17. Utilisation selon la revendication 16, **caractérisée en ce que** le fil de bobinage métallique est utilisé en contact avec un fluide d'isolation choisi parmi le groupe constitué d'une huile minérale, d'une huile siliconée, d'une huile végétale, d'une huile synthétique et de leurs mélanges.

18. Dispositif électrique comprenant le fil de bobinage isolé selon l'une quelconque des revendications 1 à 4.
